# EUROPÄISCHE PATENTSCHRIFT

(11) **EP 1 934 078 B1**
(45) Veröffentlichungstag und Bekanntmachung des Hinweises auf die Patenterteilung: **25.04.2012**
(21) Anmeldenummer: 06791861.5
(22) Anmeldetag: 06.09.2006
(51) Int. Cl.: B60T 11/10, B60T 7/10, B60T 13/68

(54) **VERFAHREN ZUM STEUERN EINER ELEKTRISCHEN FESTSTELLBREMSE EINES NUTZFAHRZEUGS**
METHOD FOR CONTROLLING AN ELECTRIC PARKING BRAKE OF A UTILITY VEHICLE
PROCEDE ET DISPOSITIF POUR COMMANDER UN FREIN DE STATIONNEMENT ELECTRIQUE SUR UN VEHICULE UTILITAIRE

(30) Priorität: 06.09.2005 DE 102005042305; 13.09.2005 DE 102005043607
(43) Veröffentlichungstag der Anmeldung: 25.06.2008
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2006/008674
(87) Internationale Veröffentlichungsnummer: WO 2007/028587

(56) Entgegenhaltungen:
- EP-A- 1 418 103
- EP-A- 1 504 975
- DE-A1- 2 420 252
- DE-A1- 3 113 362
- DE-A1- 10 357 121
- DE-C2- 4 143 666
- DE-C2- 4 143 667

## Beschreibung

Die Erfindung betrifft ein Verfahren zum Steuern einer elektrischen Feststellbremse eines Nutzfahrzeugs mit einer elektronischen Steuereinheit und einer mit der elektronischen Steuereinheit kommunizierenden Handsteuereinheit, über die von der Betätigungsart der Handsteuereinheit abhängige Fahrerwünsche an die elektronische Steuereinheit übermittelt werden.

Derartige Vorrichtungen und Verfahren erlangen im Zusammenhang mit dem Betrieb von Nutzfahrzeugen zunehmend Bedeutung. Bezüglich der Weiterentwicklung der Systeme stehen verschiedene Gesichtspunkte im Vordergrund, insbesondere der Bedienkomfort und die Sicherheit.

Aus der DB 103 53 056 A1 ist eine Handsteuereinheit bekannt, bei der großen Wert auf die genannten Aspekte gelegt wird. Im Hinblick auf die Sicherheit wird insbesondere vorgeschlagen, dass ein Lösen der elektrischen Feststellbremse nur möglich ist, wenn zwei Betätigungselemente, das heißt nicht nur ein Betätigungselement, betätigt werden. Weiterhin werden die einzelnen von den Bedienelementen betätigten Schalter in der Handsteuereinheit redundant ausgelegt. Weiterhin wird auch die Möglichkeit erwähnt, über die Handsteuereinheit eine Testfunktion zu initiieren, nämlich das Lösen der Bremsen eines Anhängers, um so zu ermitteln, ob die Feststellbremsanlage des Zugfahrzeugs alleine in der Lage ist, den gesamten Zug zu halten. Die Nutzung dieser Testfunktion ist dem Fahrzeugführer insbesondere dann angeraten, wenn er das Fahrzeug am Berg abstellt.

Die Handsteuereinheiten werden im Hinblick auf den Bedienkomfort zwar zunehmend verbessert, gleichwohl stellt die Bedienung der Handsteuereinheit für den Fahrer aber eine zusätzliche Aufgabe dar, die er gleichermaßen zuverlässig als auch bei bestimmten Fahrsituationen mit großer Häufigkeit erfüllen muss.

Die DE 41 43 666 C2 beschreibt eine elektromotorisch betätigte Feststellbremsanlage. Bei dieser ist durch ein elektronisches Steuergerät selbsttätig eine Bremsenspannkraft der Feststellbremse bewirkbar, wenn der Kraftwagen bis zum Stillstand abgebremst ist und das Betriebsbremspedal nach Erreichen des Stillstands für eine vorgegebene Zeit in Bremsstellung gehalten wird.

Der Erfindung liegt die Aufgabe zugrunde, den Bedienkomfort einer elektrischen Feststellbremse zu verbessern.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung wird durch die Merkmale von Anspruch 1 definiert.

Im Hinblick auf die Sicherheit des erfindungsgemäßen Verfahrens ist nützlicherweise vorgesehen, dass weitere Bedingungen für das Schließen der Feststellbremse vorliegen müssen, nämlich eine eingeschaltete Zündung oder bei ausgeschalteter Zündung ein Betrieb der elektronischen Steuereinheit unter Verwendung der Nachlauffunktion, keine Fehlermeldung der On-Board-Diagnose und eine ausreichend geringe Geschwindigkeit des Nutzfahrzeugs.

In diesem Zusammenhang ist es nützlich, dass das Vorliegen einer ausreichend geringen Geschwindigkeit des Nutzfahrzeugs durch Vergleich der Raddrehzahl, der Fahrzeuggeschwindigkeitsausgabe einer Steuerung und der Getriebedrehzahl mit vorgegebenen Schwellenwerten ermittelt wird. Die Raddrehzahl kann direkt durch einen Sensor ermittelt werden, die Fahrzeuggeschwindigkeit steht im Allgemeinen als Ausgangswert einer Steuerung zur Verfügung und sie wird beispielsweise in den CAN-Bus eingegeben, und die Getriebedrehzahl wird von der elektronischen Getriebesteuerung geliefert und vorzugsweise ebenfalls dem CAN-Bus aufgeprägt.

Das Einlegen der Feststellbremse erfolgt im Betrieb des Fahrzeugs häufig nach dem Bremsen des Fahrzeugs mittels Betätigen des Bremspedals. Der Fuß des Fahrers befindet sich daher bereits auf dem Bremspedal, so dass er durch eine spezielle Bedienung des Bremspedals die Feststellbremse ohne Mühe schließen kann.

Beispielsweise kann vorgesehen sein, dass die spezielle Bedienung des Bremspedals ein Verharren auf dem Bremspedal bei bereits stehendem Nutzfahrzeug über ein vorgegebenes Mindestzeitintervall umfasst.

Das weitere Durchtreten des Bremspedals kann über einen steigenden Druck in den Betriebsbremskreisen erfasst werden. Ebenfalls ist es möglich, nur ein Wegsensorsignal, das mit dem Durchtreten des Bremspedals in Verbindung steht, zu berücksichtigen.

Als besonders vorteilhaft erweist sich die vorliegende Erfindung in dem Zusammenhang, dass als zusätzliche Bedingung für das Schließen der Feststellbremse ein Abstandssensor Messwerte erfasst, die charakteristisch für eine Stop-and-Go-Situation sind. Gerade im Stop-and-Go-Betrieb kann ein häufiges Schließen der Feststellbremse erwünscht sein. Wenn das Vorliegen einer solchen Stop-and-Go-Situation noch durch Messwerte eines Abstandsensors für plausibel gehalten wird, so kann dies als weiters Kriterium dafür herangezogen werden, dass die spezielle Bedienung des Bremspedals zum Schließen der Feststellbremse führt.

Die Erfindung wird nun mit Bezug auf die begleitenden Zeichnungen anhand besonders bevorzugter Ausführungsformen beispielhaft erläutert.

Es zeigen:
- Figur 1: ein Schaltungsdiagramm zur Erläuterung einer Vorrichtung mit einer schematischen Darstellung einer ersten Ausführungsform einer Betätigungsvorrichtung für eine Handsteuereinheit;
- Figur 2: eine zweite Ausführungsform einer Betätigungsvorrichtung für eine Handsteuereinheit;
- Figur 3: eine dritte Ausführungsform einer Betätigungsvorrichtung für eine Handsteuereinheit;
- Figur 4: eine schematische Darstellung zur Erläuterung einer Handsteuereinheit, die im Rahmen der vorliegenden Erfindung zum Einsatz kommen kann;
- Figur 5: ein Diagramm zur Veranschaulichung eines Parkvorgangs unter Verwendung einer elektrischen Feststellbremse;
- Figur 6: ein Diagramm zur Veranschaulichung eines weiteren Parkvorgangs unter Verwendung einer elektrischen Feststellbremse;
- Figur 7: ein Diagramm zur Veranschaulichung einer Anhänger-Test-Funktion unter Verwendung einer elektrischen Feststellbremse;
- Figur 8: ein Diagramm zur Veranschaulichung eines Lösevorgangs einer elektrischen Feststellbremse;
- Figur 9: ein Diagramm zur Veranschaulichung des Einsatzes einer elektrischen Feststellbremse beim Anhalten während Stop and Go;
- Figur 10: ein Diagramm zur Veranschaulichung des Einsatzes einer elektrischen Feststellbremse beim Anfahren während Stop and Go;
- Figur 11: ein Diagramm zur Veranschaulichung der Verzögerung eines Fahrzeugs unter Verwendung einer elektrischen Feststellbremse;
- Figur 12: ein Diagramm zur Veranschaulichung der Unterstützung einer Betriebsbremse durch eine elektrische Feststellbremse und
- Figur 13: ein Diagramm zur Veranschaulichung der Verzögerung eines Fahrzeugs unter Verwendung einer Handsteuereinheit.

Bei der nachfolgenden Beschreibung der bevorzugten Ausführungsformen der Erfindung bezeichnen gleiche Bezugszeichen gleiche oder vergleichbare Komponenten.

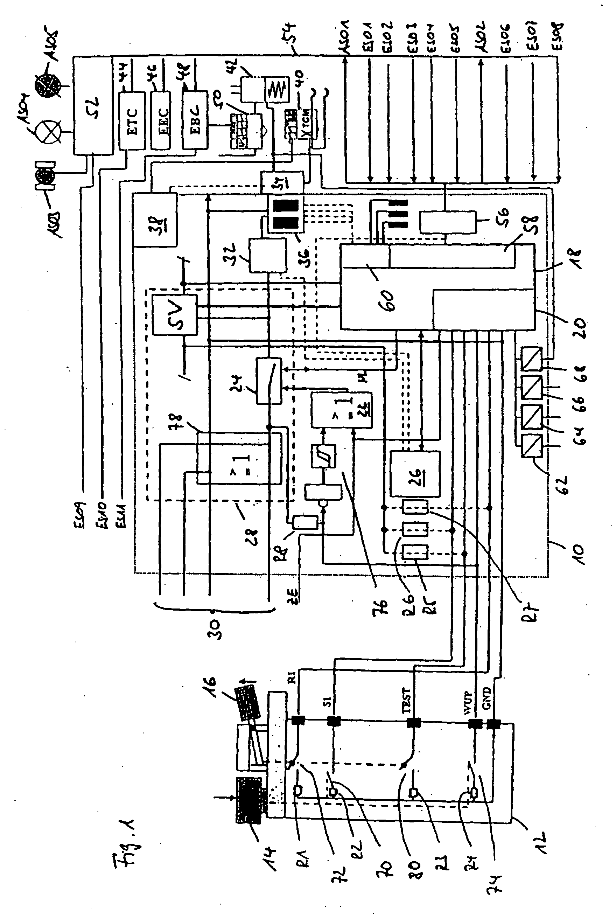

Figur 1 zeigt ein Schaltungsdiagramm zur Erläuterung einer Vorrichtung mit einer schematischen Darstellung einer ersten Ausführungsform einer Betätigungsvorrichtung für eine Handsteuereinheit. Es ist eine elektronische Steuereinheit 10 dargestellt. Diese enthält einen Mikrocontroller 18 und einen Watchdogtimer 26 Der Watchdogtimer 26 dient der Überwachung des Mikrocontrollers 18, und er enthält zu diesem Zweck einen zweiten Mikrocontroller. Aufgrund der Anwesenheit von zwei Mikrocontrollern kann Redundanz zur Verfügung gestellt werden.

Es ist weiterhin ein Netzteil 28 vorgesehen, dem Spannung aus einer doppelten, das heißt redundanten, Spannungsversorgung zugeführt werden kann. Das Netzteil 28 liefert insbesondere dem Mikrocontroller 18 eine stabile Spannung von vorzugsweise 5 V. es ist weiterhin ein Shut-Down-Relais 32 vorgesehen, welches, veranlasst von dem Watchdogtimer 26, die Anlage in einen sicheren Zustand überführen kann, insbesondere die die Schaltfunktionen der Feststellbremsenpneumatik 34 vermittelnden Magnetventile 36.

Es sind weiterhin eine EAC-Pneumatikschnittstelle 38 (EAC = elektronische Luftaufbereitungsanlage) sowie Einrichtungen in der Peripherie der elektronischen Steuereinheit 10 dargestellt. Beispielsweise ist die EAC-Pneumatikschnittstelle 28, neben ihrer Verbindung mit der Feststellbremsenpneumatik 34, auch mit dem Anhängersteuermodul 40 verbunden. Das Anhängersteuermodul 40 steht auch mit der Feststellbremsepneumatik 34 in Verbindung, insbesondere zur Realisierung einer nachfolgend noch zu beschreibenden Testsfunktion. Eine weitere Verbindung der Feststellbremsenpneumatik 34 besteht zu den Federspeicherzylindern 42 der Feststellbremse, von denen einer stellvertretend dargestellt ist. Weitere periphere Komponenten sind eine elektronische Getriebesteuerung (ETC) 44, eine elektronische Motorsteuerung (EEC) 46 und eine elektronische Bremssteuerung (EBC) 48. Die elektronische Bremssteuerung 48 steht mit einem Modulator 50 in Verbindung, über den der Druck in den Federspeicherzylindern 42 veränderbar ist. Weiterhin ist eine zentrale elektronische Steuereinheit 52 vorgesehen, die auch im Rahmen eines Fahrzeugsführungsrechners beziehungsweise eines zentralen Bordrechners realisiert sein kann. Die zentrale elektronische Steuerung 52 empfängt beispielsweise Signale ES09, die den Zustand der Türen und die Sitzbelegung kennzeichnen. Im Zusammenhang mit der vorliegenden Erfindung relevante Ausgangssignale sind beispielsweise ein Parksignal AS03, ein Warn- beziehungsweise Fehlersignal AS04 und ein Stoppsignal AS05, das beispielsweise bei angezogener Handbremse während des Stop-and-Go-Betriebs ausgegeben wird. Die elektronische Getriebesteuerung 44 empfängt beispielsweise Signale ES10, die den Getriebe- und Kupplungszustand, den eingelegten Gang und die Kardandrehzahl kennzeichnen. Die elektronische Bremssteuerung 48 empfängt beispielsweise Signale ES11 betreffend die Bremspedalsituation und den Betriebsbremsdruck. Die genannten Steuereinheiten 44, 46, 48, 52 stehen über einen CAN-Bus 54 mit einer CAN-Schnittstelle 56 der elektronischen Steuereinheit 10 in Verbindung. Über diese CAN-Schnittstele 56 kann den Mikrocontroller 18 über dessen CAN-Schnittstelle 58 eine Vielzahl von Eingangssignalen übermittelt werden. Ebenfalls können Ausgangsignale ausgegeben werden. Es kommen unter anderem die folgenden Eingangsignale in Frage:
- ES01:: Eine Anforderung für die Betätigung der elektrischen Feststellbremse.
- ES02:: Die Fahrzeuggeschwindigkeit.
- ES03:: Die Stellung des Gaspedals und ein Signal einer Abstandsregelung.
- ES04:: Eine Bremspedalstellung.
- ES05:: Ein Zustand der elektronischen Getriebesteuerung insbesondere im Hinblick auf eine Verzögerung.
- ES06:: Der Zustand des Getriebes und der Kupplung, ausgegeben von der elektronischen Getriebesteuerung.
- ES07:: Die Raddrehzahl.
- ES08:: Der Zustand der elektronischen Motorsteuerung.

Als Ausgangssignale kommen insbesondere in Betracht:
- AS01:: Ein an die On-Board-Diagnose ausgegebenes auf die elektrische Feststellbremse bezogenes Zustandssignal.
- AS02:: Eine Anforderung der elektronischen Bremssteuerung im Hinblick auf eine Unterstützung der Betriebsbremse.

Neben der CAN-Schnittstelle 58 hat der Mikrocontroller 18 weiterhin direkte digitale und/oder analoge Ausgänge 60, insbesondere zum Ansteuern von Magnetspulen, die den Zugriff auf die pneumatische Steuerung vermitteln.

Die elektronische Steuereinheit 10 weist weiterhin Drucksensoren 62, 64, 66, 68 auf. Die Drucksensoren 62, 64 erfassen den Druck in den Betriebsbremskreisen. Der Drucksensor 66 ist der Anhängerbremsanlage zugeordnet. Der Drucksensor 68 dient der Messung des Drucks in den Federspeicherzylindern.

Es sind weitere Komponenten vorgesehen, die im Zusammenhang mit dem Betrieb der Handsteuereinheit 12 stehen und die mit Bezug auf die nachfolgende Beschreibung der Funktionsweise der Handsteuereinheit 12 und deren Zusammenspiel mit der elektronischen Steuereinheit 10 erläutert werden.

Die Handsteuereinheit 12 hat zwei Bedienelemente 14, 16. Das Bedienelement 14 dient dem Schließen der Feststellbremse durch Drücken, während das Bedienelement 16 dem Öffnen der Feststellbremse durch Ziehen dient. Zum Zwecke des Schließens der Feststellbremse ist das Bedienelement 14 an einen Schalter 70 gekoppelt. Wird dieser Schalter geschlossen, so wird ein Signal S1 an den Analog-Digital-Wandler 20 des Mikrocontrollers 18 ausgegeben. Zum Zwecke des Lösens der Feststellbremse ist das Bedienelement 16 mit dem Schalter 72 gekoppelt. Wird der Schalter 72 geschlossen, so wird ein Signal R1 an den Analog-Digital-Wandler 20 des Mikrocontrollers 18 ausgegeben.

Zusätzlich zu seiner Kopplung an den Schalter 70 ist das Betätigungselement 14 aber auch an den Schalter 74 gekoppelt. Dieser Schalter 74 dient der Erzeugung eines Aufwecksignals WUP, das ebenfalls an den Analog-Digital-Wandler 20 des Mikrocontrollers 18 ausgegeben wird. Das Aufwecksignal WUP wird aber auch einer Schmitt-Triggerschaltung 76 zugeführt. Das Ausgangssignal der Schmitt-Triggerschaltung 76 wird einer Schaltlogik 22 zugeführt, die immer dann ein Ausgangssignal ausgibt, wenn mindestens ein Eingangssignal vorliegt. Der Schaltlogik 22 wird weiterhin ein "Zündung-Ein"-Signal ZE zugeführt, das heißt im einfachsten Fall eine Spannung, die immer dann vorliegt, wenn die Zündung eingeschaltet ist. Das Ausgangssignal der Schaltlogik 22 nimmt Einfluss auf einen in dem Netzteil 28 integrierten Schalter 24. Liegen entweder das "Zündung-Ein"-Signal ZE oder das Aufwecksignal WUP vor, so wird der Schalter 24 geschlossen, so dass die Feststellbremsanlage und insbesondere der Mikrocontroller 18 mit einer Spannung versorgt werden. Die doppelte Versorgungsspannung 30 wird zu diesem Zwecke innerhalb des Netzteils 28 über ein Kopplungselement 78 zugeführt, das im allgemeinen dafür sorgt, dass die höhere Spannung der redundanten Spannungsversorgung 30 zur Versorgung der Feststellbremse herangezogen wird.

Ähnlich, wie dem Betätigungselement 14 neben der Kopplung an den Schalter 70 zum Schließen der Feststellbremsanlage der Schalter 74 zum Erzeugen des Aufwecksignals WUP zugeordnet ist, ist dem Betätigungselement 16 zum Lösen der Feststellbremse neben dem Schalter 72 der Schalter 80 zugeordnet. Beim Schließen dieses Schalter S80 wird ein Signal TEST erzeugt, das dem Analog-Digital-Wandler 20 des Mikrocontrollers 18 zugeführt wird, so dass auf dessen Grundlage geprüft werden kann, ob das Zugfahrzeug alleine in der Lage ist, den gesamten Zug, bestehend aus Zugfahrzeug und Anhänger, zu halten. Vorteilhafterweise kann der Schalter 80 auch als Redundanzschalter für den Schalter 72 dienen. Gleichermaßen kann der Schalter 74 als Redundanzschalter für den Schalter 70 herangezogen werden.

In der Handsteuereinheit 12 und der elektronischen Steuereinheit 10 sind weiterhin noch Widerstände R1, R2 R3, R4, R5, R6, R7 und R8 dargestellt, die so dimensioniert sind, dass dem Mikrocontroller 18 und der Schmitt-Triggerschaltung 76 die geeigneten Signale zugeführt werden. Beispielsweise wird durch das Schließen des Schalters 72 der damit verbundene Eingang des Analog-Digital-Wandlers 20 des Mikrocontrollers 18 über den Widerstand R1 mit Erde GND verbunden, so dass hierdurch ein Signal erzeugt wird. Beim Öffnen des Schalters 72 liegt der entsprechende Eingang wieder über den Widerstand R7 auf dem positiven Potential des Netzteils 28.

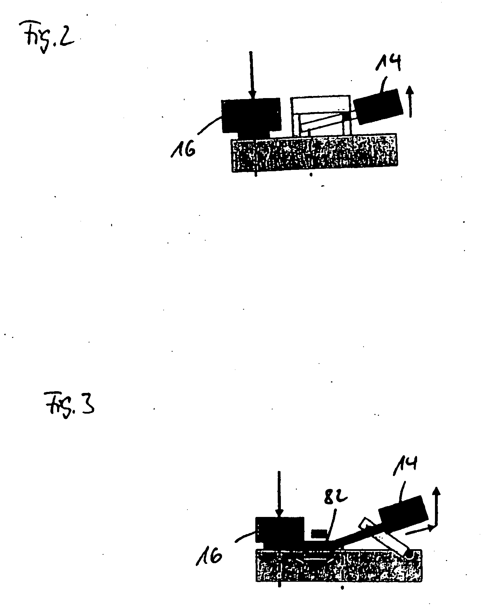

So wie bei der Ausführungsform gemäß Figur 1 die Feststellbremse durch Drücken geschlossen und durch Ziehen geöffnet wird, ist bei der Betätigungsvorrichtung gemäß Figur 2 vorgesehen, die Feststellbremse durch Ziehen des Betätigungselementes 14 zu schließen und durch Drücken des Betätigungselementes 16 zu öffnen.

Auch bei Figur 3 wird die Feststellbremse durch Ziehen des Betätigungselementes 14 geschlossen und durch Drücken des Betätigungselementes 16 geöffnet. Es ist zusätzlich ein Riegel 82 vorgesehen, der das Drücken des Betätigungselementes 16 verhindert, wenn nicht gleichzeitig das Betätigungselement 14 gezogen ist. Auf diese Weise wird ein Lösen der Feststellbremse nur dann möglich sein, wenn beide Betätigungselemente 14, 16 gleichzeitig betätigt werden. Dies schafft zusätzliche Sicherheit.

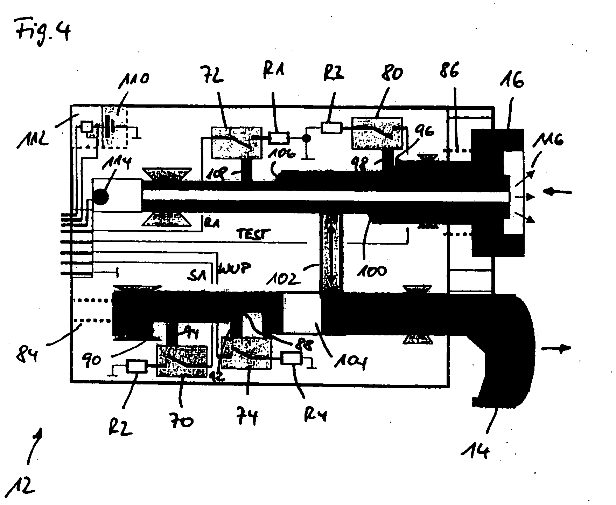

Figur 4 zeigt eine schematische Darstellung zur Erläuterung einer Handsteuereinheit, die im Rahmen der vorliegenden Erfindung zum Einsatz kommen kann. Die Handsteuereinheit 12 hat ein Betätigungselement 14, das Schaltfunktionen durch Ziehen auslöst, und ein Betätigungselement 14, das Schaltfunktionen durch Drücken auslöst. Das Betätigungselement 14 ist über eine Zugfeder 84 mit einem Gehäuse der Handsteuereinheit unmittelbar oder mittelbar verbunden. Das Betätigungselement 16 ist über eine Druckfeder 68 mit dem Gehäuse der Handsteuereinheit 12 mittelbar oder unmittelbar verbunden.

Eine Betätigung des Betätigungselementes 14 kann ohne weiteres erfolgen. Indem das Betätigungselement 14 gegen die Kraft der Zugfeder 84 gezogen wird, schließt zunächst der Schalter 74, so dass auf diese Weise das Signal WUP an den Mikrocontroller (siehe Figur 1) ausgegeben wird. Dieses Signal WUP dient im Falle einer ausgeschalteten Zündung als Aufwecksignal. Ebenfalls dient es als redundantes Signal zu dem nachfolgend durch weiteres Ziehen des Betätigungselementes 14 erzeugten Signals S1, das aufgrund des Schließens des Schalters 70 ein Schließen der Feststellbremse bewirkt. Die Betätigung der Schalter 74, 70 erfolgt durch entsprechende Abschrägungen 88, 90 am Betätigungselement 14, die auf federvorgespannte, den Schaltern 70, 74 zugeordnete Taster 92, 94 wirken.

Auch das Betätigungselement 16 kann zunächst ohne weiteres betätigt werden, nämlich indem es gegen die Kraft der Druckfeder 86 gedrückt wird. Die Abschrägung 96 des Betätigungselementes 16 betätigt den federvorgespannten Taster 28, so dass der Schalter 80 geschlossen wird. Somit kann die Anhänger-Test-Funktion ausgeführt werden. Soll das Betätigungselement 16 aber weiter bewegt werden, so stößt die Abschrägung 100 des Betätigungselementes 16 gegen eine Blockade, nämlich einen federzentrierten Gleitstein 102. Das Betätigungselement 16 kann somit nicht weiter bewegt werden. Erst durch gleichzeitiges Betätigen des Betätigungselementes 14 wird eine Öffnung 104 in dem Betätigungselement 14 so angeordnet, dass der Gleitstein 102 mit der Öffnung 104 fluchtet. Folglich kann die durch das Betätigungselement 16 auf den Gleitstein ausgeübte Kraft eine Verschiebung des Gleitsteins 102 in die Öffnung 104 bewirken. Nachdem diese Verschiebung erfolgt ist, kann das Betätigungselement 16 weiter gedrückt werden und aufgrund der Krafteinwirkung der Abschrägung 106 auf den federvorgespannten Taster 108 den Schalter 72 zum Öffnen der Feststellbremse betätigen. In Folge des Betätigens des Betätigungselementes 16 werden daher nacheinander die Signale TEST und R1 erzeugt, wobei es zur Erzeugung des Signals R1 nur nach mechanischer Freigabe des Gleitsteins 102 in Folge eines Herausziehens des Betätigungselementes 14 kommen kann.

Die Handsteuereinheit umfasst weiterhin optional einen Akkumulator 110 und eine zugeordnete Regeleinheit 112. Weiterhin ist optional eine LED 114 vorgesehen, die über einen sich in axiale Richtung des Betätigungselementes 16 erstreckenden Kanal Lichtsignale 116 ausgeben kann. Solche Lichtsignale können beispielsweise den Fahrer zum Ausführen der Anhängertestfunktion auffordern. Ebenfalls ist es denkbar, dass Warnsignale oder Statussignale über die Lichtsignale 116 ausgegeben werden.

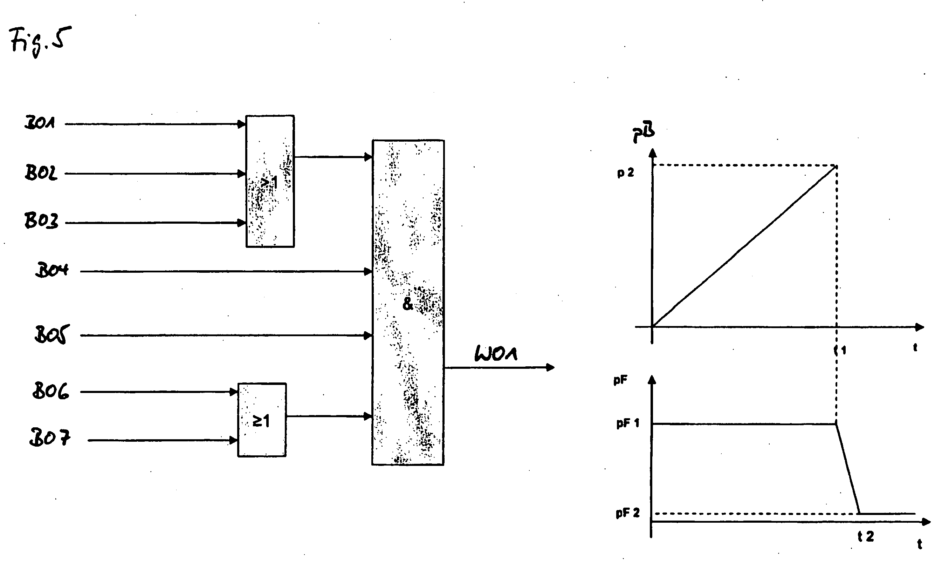

Die Figuren 5 bis 11 veranschaulichen verschiedene Abläufe im Bremssystem eines Nutzfahrzeugs, die mit einer elektrischen Feststellbremse der beschriebenen Art im Zusammenhang stehen. Es werden Vorgänge erläutert, bei denen bestimmte Wirkungen (W01-W09) von bestimmten Bedingungen (B01-B30) und deren logischer Verknüpfung abhängen. Aus Gründen der Übersichtlichkeit sind diese Bedingungen und Wirkungen nachfolgend zunächst stichpunktartig aufgelistet. Eine detaillierte Beschreibung folgt im Anschluss an diese Auflistung.
- B01:: Raddrehzahl < x rpm.
- B02:: Fahrzeuggeschwindigkeit < x km/h.
- B03:: Getriebedrehzahl < x rpm.
- B04:: On-Board-Diagnose meldet keinen Fehler.
- B05:: Schalter 70 der Handsteuereinheit ist geschlossen bzw. Signal S1 liegt vor.
- B06:: Zündung ist eingeschaltet bzw. Signal ZE liegt vor.
- B07:: Zündung ist ausgeschaltet, Nachlauf.
- B08:: Gangwählhebel steht in Parkposition.
- B09:: Feststellbremse ist geschlossen.
- B10:: Schalter 80 der Handsteuereinheit ist geschlossen bzw. Signal TEST liegt vor.
- B11:: Schalter 72 der Handsteuereinheit ist geschlossen bzw. Signal R1 liegt vor.
- B12:: Betriebsbremse ist aktiviert.
- B13:: Motor läuft nicht.
- B14:: Motor läuft.
- B15:: Vorgegebener Mindestbremsdruck der Betriebsbremse liegt vor.
- B16:: Betriebsbremse über vorgegebenen Mindestzeitraum t1* aktiv.
- B17:: Gaspedal nicht aktiv.
- B18:: Kupplung und/oder Antriebsstrang offen.
- B19:: Zusätzliche Bremsanforderung.
- B20:: Vorgegebener Abstand zu vorausfahrendem Fahrzeug wir unterschritten.
- B21:: Fahrzeug setzt sich in Bewegung oder will sich in Bewegung setzen.
- B22:: Kupplung und Antriebsstrang mit zulässigem Gang geschlossen.
- B23:: Gaspedal fordert Motordrehzahl an.
- B24:: Vorgegebenes Motordrehmoment ist erreicht.
- B25:: Fahrzeug wurde zuvor im Stop-and-Go-Betrieb gebremst.
- B26:: Zündung und Türen wurden nach dem letzten Bremsvorgang nicht betätigt.
- B27:: Schalter 74 der Handsteuereinheit ist geschlossen bzw. Signal WUP liegt vor.
- B28:: On-Board-Diagnose meldet Kreisdefekt.
- B29:: Elektronische Bremssteuerung (EBC) stellt Unterstützungsanfrage an elektronische Steuereinheit der Feststellbremse.
- B30:: Fahrzeug bewegt sich.
- W01:: Elektrische Feststellbremse wird gemäß vorgegebener Zeit-Druck-Kennlinie geschlossen; vollständiges Schließen bei stehendem Fahrzeug.
- W02:: Elektronische Steuereinheit aktiviert Magnetventil für Testfunktion; Unterstützung durch Betriebsbremse, falls Fahrzeug sich bewegt.
- W03:: Elektrische Feststellbremse wird geöffnet.
- W04:: Elektrische Feststellbremse wird geschlossen.
- W05:: Elektrische Feststellbremse wird gemäß vorgegebener Zeit-Druck-Kennlinie geöffnet.
- W06:: Betriebsbremsdruck steigt mit geringer Steigung.
- W07:: Betriebsbremsdruck steigt mit größerer Steigung.
- W08:: Elektrische Feststellbremse wird gemäß vorgegebener Zeit-Druck-Kennlinie geschlossen, wenn Betriebsbremse aktiviert wird.
- W09:: Elektronische Steuereinheit sendet Anfrage an Elektronische Bremssteuerung (EBC) zur Ausführung einer Bremsung gemäß vorgegebener Zeit-Druck-Kennlinie.

Figur 5 veranschaulicht einen normalen Parkvorgang unter Einsatz einer elektrischen Feststellbremse. Die elektronische Steuereinheit prüft das Vorliegen der Bedingungen B01 bis B07, sie verknüpft diese Bedingungen logisch und nimmt in Abhängigkeit des Ergebnisses dieser Verknüpfungen Einfluss auf die elektrische Feststellbremse. Zunächst wird geprüft, ob mindestens zwei der Bedingungen B01-B03 vorliegen, das heißt ob die Raddrehzahl unterhalb einer vorgegebenen Drehzahl liegt, die Fahrzeuggeschwindigkeit unterhalb eines vorgegebenen Wertes liegt und die Getriebedrehzahl unterhalb eines bestimmten Wertes liegt. Liegen mindestens zwei dieser Kriterien vor, so wird ein Signal an die dargestellte UND-Verknüpfung ausgegeben. Bei diesem und weiteren vorliegend beschriebenen Steuervorgängen kann auch vorgesehen sein, dass das Vorliegen einer der Bedingungen ausreicht. Weiter zu prüfende Bedingungen sind das Vorliegen der Bedingung B04, das heißt, ob die On-Bord-Diagnose keinen Fehler meldet, und das Prüfen der Bedingung B05, das heißt, ob der Schalter 70 der Handsteuereinheit geschlossen ist beziehungsweise, mit anderen Worten, ob das Signal S1 vorliegt.

Weiterhin wird geprüft, ob mindestens eine der Bedingungen B06 und B07 vorliegt, nämlich, ob entweder die Zündung eingeschaltet ist (Bedingung B06) oder ob die Zündung ausgeschaltet ist und sich die elektronische Steuereinheit aber in ihrem Nachlaufmodus befindet. Führt diese Prüfung der Bedingungen B01 bis B07 unter der Voraussetzung der geschilderten logischen Verknüpfungen zu positiven Ergebnissen, so hat dies die Wirkung W01 auf die elektrische Feststellbremse zur Folge; diese wird dann gemäß einer vorgegebenen Zeit-Druck-Kennlinie geschlossen; ein vollständiges Schließen erfolgt bei stehendem Fahrzeug. Diese Zusammenhänge sind in den Funktionsdiagrammen erläutert wobei in einem der Diagramme der Betriebsbremsdruck pB gegen die Zeit t aufgetragen ist, während in dem anderen Diagramm der in den Federspeicherzylindern der Feststellbremse gemessene Druck pF gegen die Zeit t aufgetragen ist. Es ist erkennbar, dass der Betriebsbremsdruck zunächst bis zur Zeit t1 auf einen vorgegebenen Wert p2 ansteigt. Anschließend fällt der Druck in den Federspeicherzylindern pF von einem Wert pF1 bis zum Zeitpunkt t2 auf einen Wert pF2 ab, wobei der Wert pF2 einer geschlossenen Feststellbremse entspricht. Dieser hier einfach dargestellte Druckverlauf kann unter Umständen veränderte Ausprägungen aufweisen. Beispielsweise ist es möglich, dass nach dem Zeitpunkt t1 der Druck pF in den Federspeicherzylindern zunächst langsam gemäß einer Zeit-Druck-Kennlinie abfällt und das Fahrzeug vor dem vollständigem Schließen der Feststellbremse zum vollständigen Stillstand kommt; ab dann kann der weitere Druckabfall in den Federspeicherzylindern schneller erfolgen. Es wird auch häufig der Fall auftreten, dass zum Zeitpunkt t1 das Fahrzeug bereits vollständig steht, so dass im Anschluss daran ein sofortiges schnelles Entlüften der Federspeicherzylinder erfolgen kann.

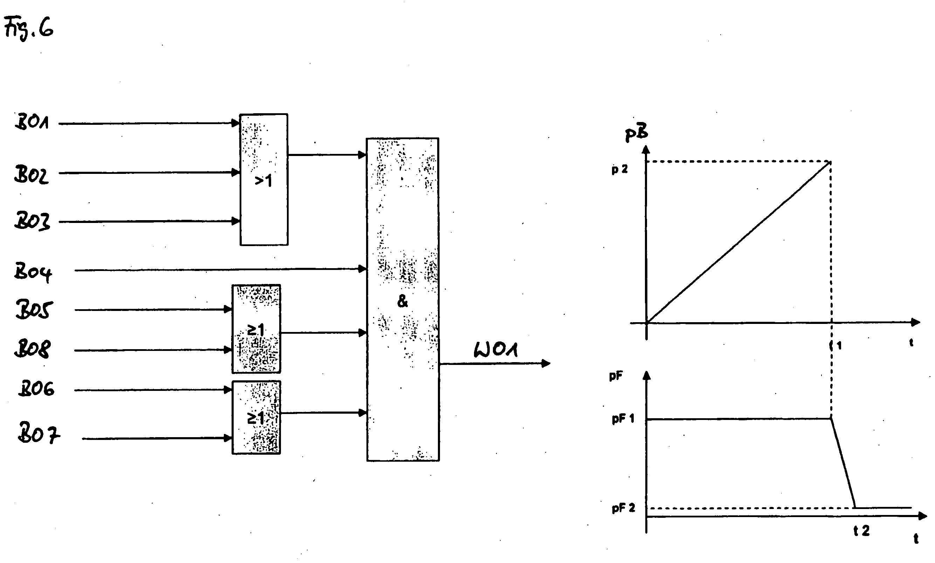

Figur 6 zeigt eine bevorzugte Variante des Einlegens der elektrischen Feststellbremse bei einem normalen Parkvorgang. Gemäß Figur 6 ist es nun nicht mehr unbedingt erforderlich, dass die Bedingung B05, nämlich das Schließen des Schalters 70 der Handsteuereinheit, vorliegt. Vielmehr kann die elektrische Parkbremse auch dann ohne weiteres Zutun des Fahrers geschlossen werden, wenn der Wählhebel der Gangschaltung des Fahrzeugs in Parkposition steht.

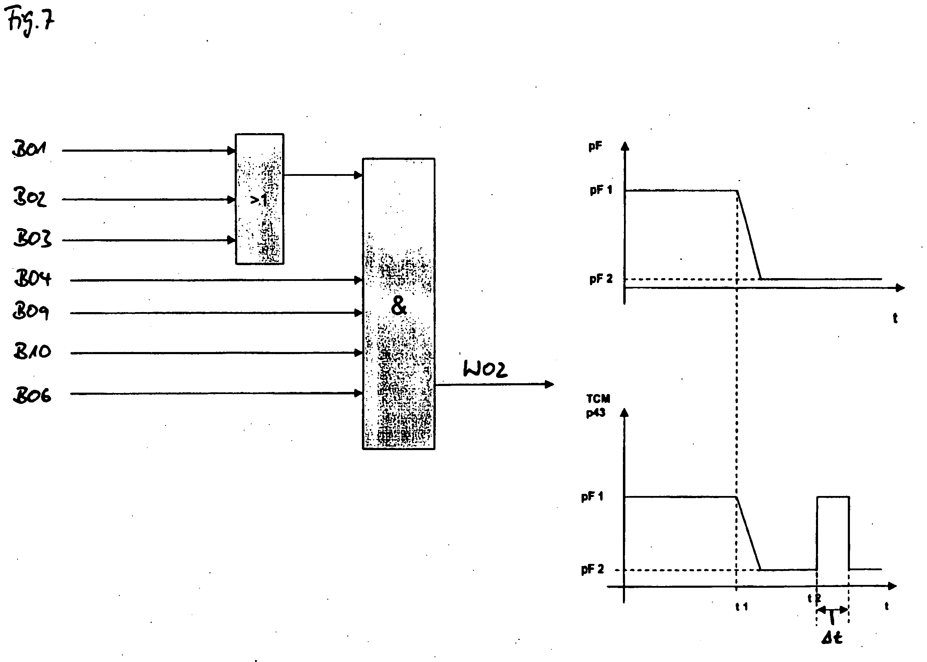

Anhand von Figur 7 wird ein Verfahren erläutert, das der Prüfung der Feststellbremse bei einem mit einem Anhänger ausgestatteten Nutzfahrzeug dient. Es wird geprüft, ob das Nutzfahrzeug in der Lage ist, den gesamten Zug bei eingelegter Feststellbremse selbstständig zu halten. Bei einem am Berg abgestellten Nutzfahrzeug schafft dies zusätzliche Sicherheit. Neben den bereits im Zusammenhang mit den Figuren 5 und 6 erläuterten Bedingungen wird nun die Bedingung B09 geprüft, das heißt ob die Feststellbremse geschlossen ist. Weiterhin muss gemäß Bedingung B10 der Schalter 80 der Handsteuereinheit geschlossen sein, mit anderen Worten, das Signal TEST muss vorliegen. Kommen die logischen Verknüpfungen zu einem positiven Ergebnis, so kommt es zur Wirkung W02, das heißt die elektronische Steuereinheit aktiviert das Magnetventil für die Testfunktion. Weiterhin findet eine Unterstützung durch die Betriebsbremse statt, falls sich das Fahrzeug bewegt. Diese Verhältnisse sind wiederum anhand von zwei Diagrammen verdeutlicht, wobei bei einem Diagramm der Druck in den Federspeicherzylindern pF gegen die Zeit t aufgetragen ist, während in dem anderen Diagramm ein am Anhängersteuermodul TCM gemessener Druck p43 gegen die Zeit t gezeigt ist. Ab dem Zeitpunkt t1 werden sowohl die Federspeicherzylinder des Zugfahrzeugs als auch die Federspeicherzylinder des Anhängers entlüftet, was sich in den Druckabfällen der Drücke pF und p43 zeigt. Zu einem späteren Zeitpunkt t2 werden die Federspeicherzylinder des Anhängers nochmals für ein gewisses Zeitintervall At belüftet.

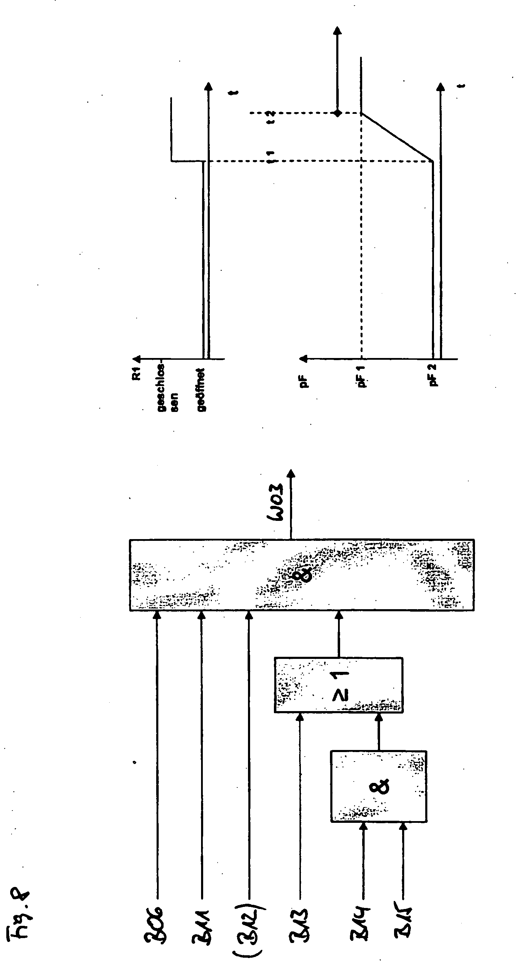

Figur 8 veranschaulicht das normale Lösen der elektrischen Feststellbremse nach dem Parken des Nutzfahrzeugs. Die Zündung muss eingeschaltet sein (B06), der Schalter 72 der Handsteuereinheit muss geschlossen sein, mit anderen Worten, das Signal R1 muss vorliegen (B11), und optional kann geprüft werden, ob die Betriebsbremse aktiviert ist (B12). Ist zusätzlich die Bedingung B13 erfüllt, das heißt der Motor läuft nicht, kann die Wirkung W03 ausgelöst werden, nämlich das Öffnen der elektrischen Feststellbremse. Für den Fall, dass der Motor läuft (B14) muss zusätzlich geprüft werden, ob ein vorgegebener Mindestbremsdruck der Betriebsbremse vorliegt. In dem Funktionsdiagramm ist dies nochmals erläutert. Solange das Signal R1 bei geöffnetem Schalter 72 nicht vorliegt, bleibt der Druck in den Federspeicherzylindern pF auf dem Niveau p2. Nach dem Schließen des Schalters zum Zeitpunkt t1 steigt der Druck in den Federspeicherzylindern auf das Niveau pF1 an. Folglich kann sich das Fahrzeug in Bewegung setzen, was durch den von t2 ausgehenden Pfeil angedeutet wird.

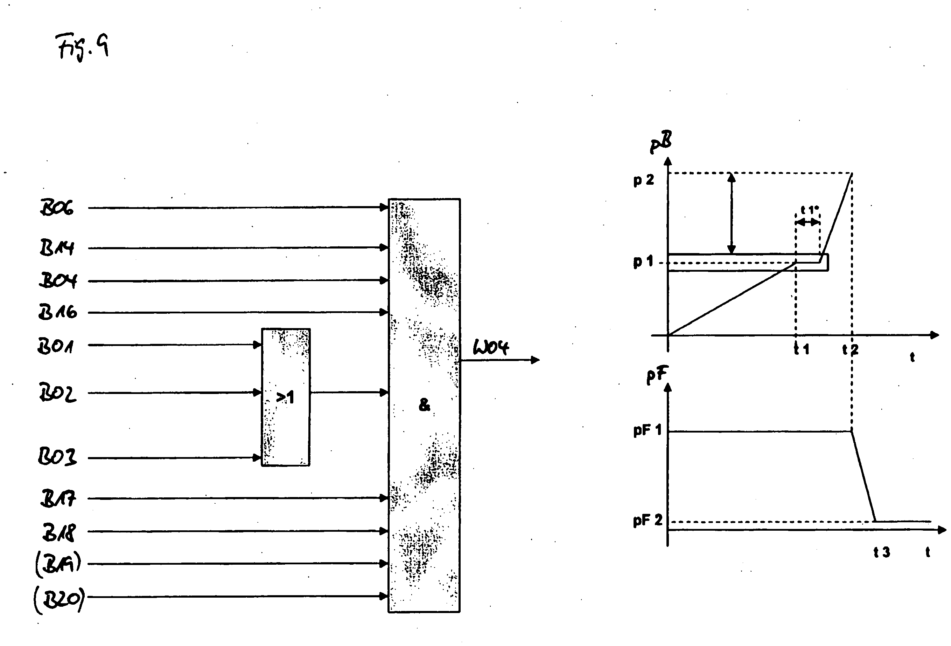

Anhand von Figur 9 wird der von der elektrischen Feststellbremse unterstützte Stop-and-Go-Betrieb erläutert. Von den Bedingungen B01 bis B03 müssen wiederum mindestens zwei Bedingungen erfüllt sein, um so mit ausreichender Sicherheit davon ausgehen zu können, dass kein Schließen der Feststellbremse bei zu hoher Geschwindigkeit erfolgen wird. Weiter zwingende Bedingungen sind die bereits vorstehend erläuterten Bedingungen B04, B06 und B14. Zusätzlich muss gegeben sein, dass die Betriebsbremse über einen vorgegebenen Mindestzeitraum t1* aktiv ist (B16). Es wird dann noch geprüft, ob das Gaspedal nicht aktiv ist (B17) und ob die Kupplung und/oder der Antriebsstrang offen sind (B18). Optional können auch die Bedingungen B19 und B20 abgefragt werden, nämlich, ob eine zusätzliche Bremsanforderung vorliegt und/oder ob Abstände zu einem vorausfahrenden Fahrzeug in einer für Stop and Go charakteristischen Weise unterschritten wird. In Abhängigkeit der geschilderten Überprüfung kann dann die elektrische Feststellbremse geschlossen werden (W04). Der Druckverlauf in den Funktionsdiagrammen veranschaulicht dies. Beim Anhalten des Fahrzeugs während Stop and Go wird der Betriebsbremsdruck pB zunächst auf t1 erhöht, wobei ein Toleranzbereich angedeutet ist. Bleibt dieser Betriebsbremsdruck nachfolgend über den Zeitraum t1* aufrechterhalten und wird weiterhin der Bremsdruck nachfolgend noch auf den Druck p2 erhöht, so werden nach dem Zeitpunkt t2 automatisch die Federspeicherzylinder entlüftet, so dass die Feststellbremse zum Zeitpunkt t2 geschlossen ist. Es ist aber auch denkbar, dass abweichend von den Diagrammen bereits nach dem Ablauf des Zeitraums t1* eine Entlüftung des Federspeicherzylinder und somit ein Schließen der Feststellbremse stattfindet, das heißt es wird nicht zusätzlich erwartet, dass der Fahrer durch weiteres Betätigen des Bremspedals den Bremsdruck erhöht.

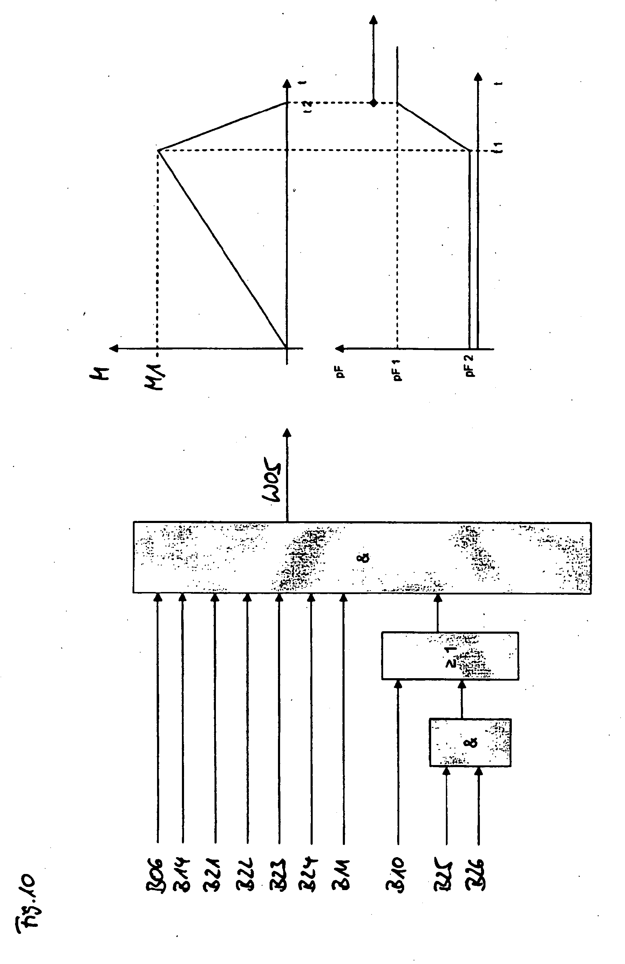

Figur 10 veranschaulicht das Anfahren während des Stop-and-Go-Betriebs. Neben den bereits vorstehend erläuterten Bedingungen B06, B11 und B14 wird geprüft, ob sich das Fahrzeug in Bewegung setzt oder in Bewegung setzen will (B21), ob die Kupplung und der Antriebsstrang mit einem zulässigen Gang geschlossen sind (B22), ob das Gaspedal eine Motordrehzahl anfordert (B23) und ob ein vorgegebenes Motordrehmoment erreicht ist (B24). Ferner müssen entweder die Bedingungen B25 und B26 gleichzeitig erfüllt sein, das heißt das Fahrzeug wurde zuvor im Stop-and-Go-Betrieb gebremst und die Zündung sowie die Türen wurden nach dem letzten Bremsvorgang nicht betätigt, oder es muss die bereits oben erwähnte Bedingung B10 vorliegen, das heißt der Schalter 80 der Handsteuereinheit muss geschlossen sein, so dass das Signal TEST vorliegt. In Abhängigkeit der Überprüfung kommt es dann zur Wirkung B05, so dass die elektrische Feststellbremse gemäß einer vorgegebenen Zeit-Druck-Kennlinie geöffnet wird. Auf der Grundlage dieses Verfahrens wird es dem Fahrer somit ermöglicht, die Feststellbremse beim Stop-and-Go-Betrieb durch bloßes Auslösen des Signals TEST zu lösen. Insbesondere dann, wenn die Handsteuereinheit so ausgelegt ist, dass die eigentliche Lösefunktion (Signal R1) nur beidhändig veranlasst werden kann, stellt das Ausreichen des Signals TEST eine erhebliche Erleichterung im Stop-and-Go-Betrieb dar. Die Diagramme zeigen das steigende Motordrehmoment M bis auf einen Wert M1 zum Zeitpunkt t1 und das nachfolgende Belüften der Federspeicherzylinder von einem Druck pF2 auf einen Druck pF1, so dass im Anschluss an einen Zeitpunkt t2 das Fahrzeug, angedeutet durch den von t2 ausgehenden Pfeil, anfahren kann.

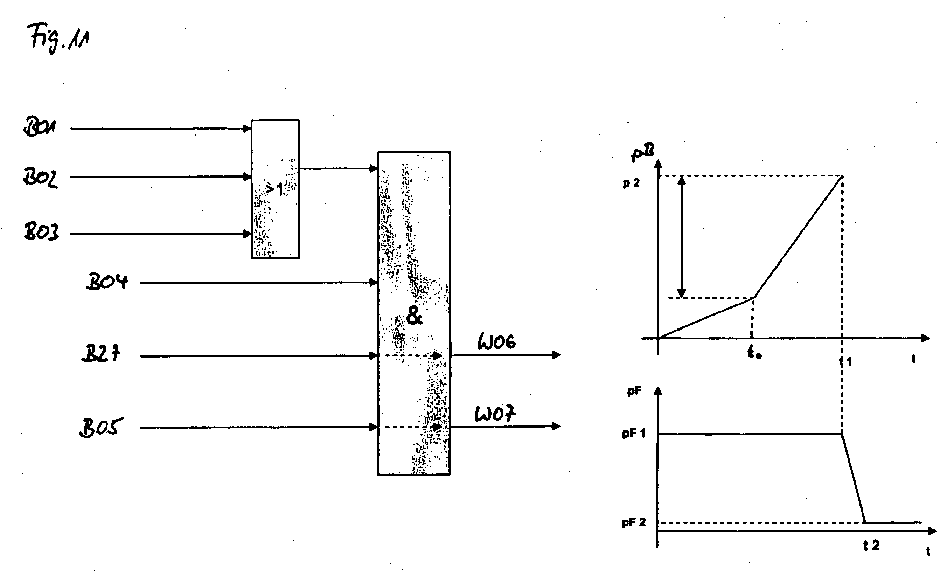

In Figur 11 ist dargestellt, unter welchen Voraussetzungen das Nutzfahrzeug durch die elektrische Feststellbremse verzögert werden kann. Zunächst muss wiederum durch die Überprüfung der bereits erläuterten Bedingungen B01 bis B03 geprüft werden, ob das Fahrzeug ausreichend langsam fährt. Weiterhin darf gemäß Bedingung B04 die On-Bord-Diagnose keinen Fehler melden. Liegt dann zunächst die Bedingung B27 vor, das heißt der Schalter 74 der Handsteuereinheit ist geschlossen, mit anderen Worten, das eigentlich als Aufwecksignal vorgesehene Signal WUP liegt vor, so kann der Betriebsbremsdruck gemäß der Wirkung W06 zunächst mit einer geringen Steigung ansteigen. Dies ist in dem Diagramm dargestellt, welches den Betriebsbremsdruck pB gegen die Zeit t aufträgt. Zu einem Zeitpunkt t0 kann dann die Bedingung B05 vorliegen, so dass gemäß der Wirkung W07 der Betriebsbremsdruck mit größerer Steigung bis zum Zeitpunkt t1 zunimmt. Da gemäß der Bedingung B05 das Signal S1 vorliegt, wird nachfolgend auch eine Entlüftung der Federspeicherzylinder zwischen den Zeitpunkten t1 und t2 erfolgen können, was durch den Druckabfall von pF1 auf pF2 gezeigt ist.

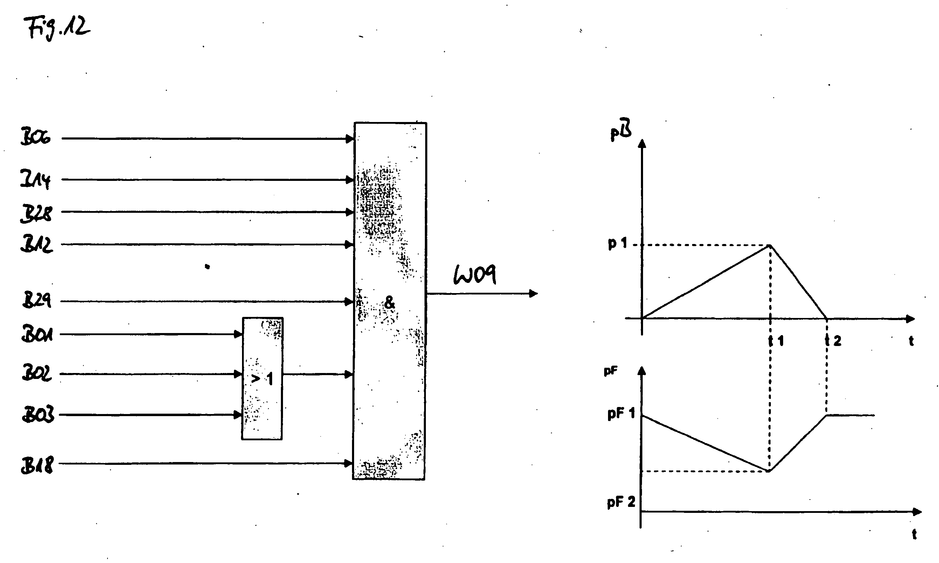

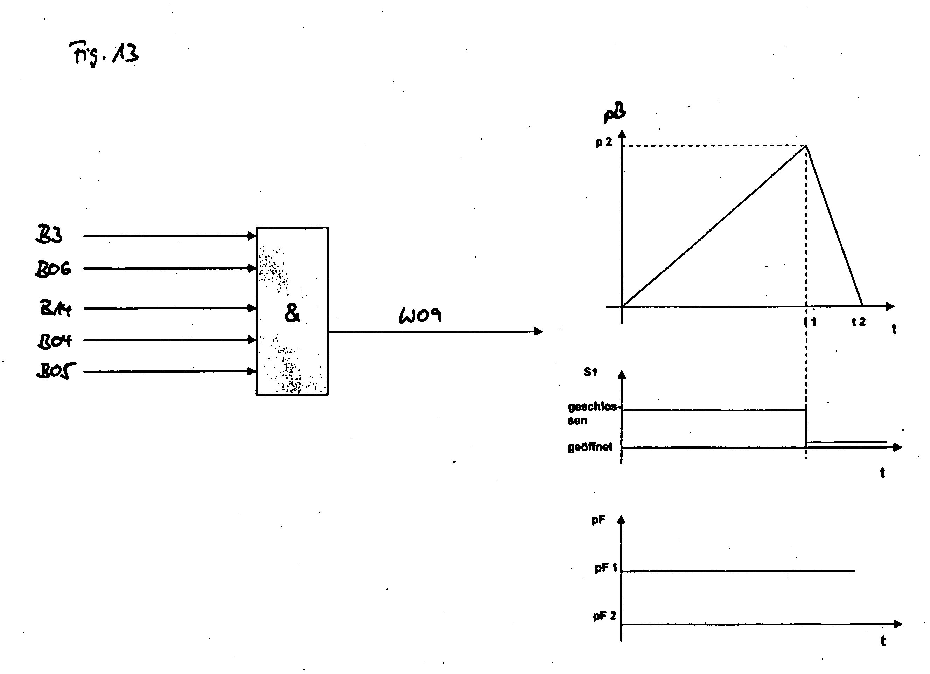

Anhand von Figur 12 wird die Unterstützung der Betriebsbremse durch die elektrische Feststellbremse im Falle eines Kreisdefektes erläutert. Wiederum ist diese Unterstützung gemäß der bereits erläuterten Überprüfung der Bedingungen B01 bis B03 nur bei geringer Geschwindigkeit des Fahrzeugs möglich. Notwendige Bedingungen sind eine eingeschaltete Zündung (B06) ein laufender Motor (B14), eine aktive Betriebsbremse (B12) und eine offene Kupplung und/oder ein offener Antriebsstrang (B18). Meldet weiterhin die Onbord-Diagnostik einen Kreisdefekt (B28) und stellt die elektronische Bremssteuerung (EBC) eine Unterstützungsanfrage an die elektronische Steuereinheit der Feststellbremse (B29), so liegen die Bedingungen vor, dass gemäß W08 die elektrische Feststellbremse gemäß einer vorgegebenen Zeit-Druck-Kennlinie geschlossen werden kann. Auch dieser Zusammenhang ist anhand der Funktionsdiagramme nochmals erläutert. Zusammen mit einem Anstieg des Betriebsbremsdrucks pB auf t1 bis zum Zeitpunkt t1 sinkt der Druck in den Federspeicherzylindern pF gemäß der dargestellten Zeit-Druck-Kennlinie. Liegt nach dem Zeitpunkt t1 keine Aktivierung der Bremse mehr vor, so zeigen die Drücke einen umgekehrten Verlauf. Anhand von Figur 13 lässt sich erläutern, unter welchen Voraussetzungen die Handsteuereinheit als Geber beim Verzögern des Fahrzeugs arbeiten kann. Hierzu darf die On-Bord-Diagnose keinen Fehler melden (B04), der Schalter 70 der Handsteuereinheit muss geschlossen werden, mit anderen Worten, das Signal S1 muss vorliegen (B05), die Zündung muss eingeschaltet sein (B06), der Motor muss laufen (B06) und das Fahrzeug muss sich bewegen (B30). Liegen alle diese Bedingungen vor, so ist es möglich, dass die elektronische Steuereinheit der elektrischen Feststellbremse eine Anfrage an die elektronische Bremssteuerung (EBC) zur Ausführung einer Bremsung gemäß einer vorgesehenen Zeit-Druck-Kennlinie sendet (W09). Eine solche Bremsung aufgrund eines geschlossenen Schalters der Handsteuereinheit ist anhand der Funktionsdiagramme erläutert. Während der Schalter 70 der Handsteuereinheit geschlossen ist und somit das Signal S1 vorliegt, erhöht sich der Bremsdruck der Betriebsbremse auf ein Druckniveau p2; der Druck in den Federspeicherzylindern pF der Feststellbremse bleibt unverändert aufrechterhalten, das heißt die Feststellbremse bleibt geöffnet. Wird der Schalter 70 zum Zeitpunkt t1 geöffnet, so dass das Signal S1 nicht mehr vorliegt, kann der Druck in der Betriebsbremse wieder abfallen, so dass die Bremswirkung nachlässt und schließlich zum Zeitpunkt t2 ausbleibt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: elektronische Steuereinheit
- 12: Handsteuereinheit
- 14: Betätigungselement zum Schließen der Feststellbremse
- 16: Betätigungselement zum Lösen der Feststellbremse
- 18: Mikrocontroller
- 20: Analog-Digital-Wandler
- 22: Schaltlogik
- 24: Schalter
- 26: Watchdogtimer
- 28: Netzteil
- 30: redundante Spannungsversorgung
- 32: Shut-Down-Relais
- 34: Feststellbremsepneumatik
- 36: Magnetventile
- 38: EAC-Pneumatikschnittstelle
- 40: Anhängersteuerungmodul
- 42: Federspeicherzylinder
- 44: elektronische Getriebesteuerung
- 46: elektronische Motorsteuerung
- 48: elektronische Bremssteuerung
- 50: Bremsdruckmodulator
- 52: zentrale elektronische Steuereinheit
- 54: CAN-Bus
- 56: CAN-Schnittstelle
- 58: CAN-Schnittstelle
- 60: direkte Ausgänge
- 62: Drucksensor
- 64: Drucksensor
- 66: Drucksensor
- 68: Drucksensor
- 70: Schalter
- 72: Schalter
- 74: Schalter
- 76: Schmitt-Triggerschaltung
- 78: Kopplungselement für Eingangsspannung
- 80: Schalter
- 82: Riegel
- 84: Zugfeder
- 86: Zugfeder
- 88: Schräge
- 90: Schräge
- 92: Taster
- 94: Taster
- 96: Schräge
- 98: Taster
- 100: Schräge
- 102: Gleitstein
- 104: Öffnung
- 106: Schräge
- 108: Taster
- 110: Akkumulator
- 112: Regler
- 114: Leuchtdiode
- 116: Lichtsignal

## Patentansprüche

1. Verfahren zum Steuern einer elektrischen Feststellbremse eines Nutzfahrzeugs mit einer elektronischen Steuereinheit (10) und einer mit der elektronischen Steuereinheit kommunizierenden Handsteuereinheit (12), über die von der Betätigungsart der Handsteuereinheit abhängige Fahrerwünsche an die elektronische Steuereinheit übermittelt werden, wobei die Feststellbremse aufgrund einer von dem Fahrer des Nutzfahrzeugs durchgeführten Aktion geschlossen wird, die nicht mit der Betätigung der Handsteuereinheit in Verbindung steht, wobei die Aktion ein Verharren auf einem Bremspedal bei bereits stehendem Nutzfahrzeug über ein vorgegebenes Mindestzeitintervall und nach dem Verharren auf dem Bremspedal ein weiteres Durchtreten des Bremspedals umfasst.

2. Verfahren nach Anspruch 1, **dadurch gekennzeichnet, dass** weitere Bedingungen für das Schließen der Feststellbremse vorliegen müssen, nämlich
- eine eingeschaltete Zündung oder bei ausgeschalteter Zündung ein Betrieb der elektronischen Steuereinheit unter Verwendung der Nachlauffunktion,
- keine Fehlermeldung der On-Board-Diagnose und
- eine ausreichend geringe Geschwindigkeit des Nutzfahrzeugs.

3. Verfahren nach Anspruch 2, **dadurch gekennzeichnet, dass** das Vorliegen einer ausreichend geringen Geschwindigkeit des Nutzfahrzeugs durch Vergleich der Raddrehzahl, der Fahrzeuggeschwindigkeitsausgabe einer Steuerung und der Getriebedrehzahl mit vorgegebenen Schwellenwerten ermittelt wird.

4. Verfahren nach einem der vorhergehenden Ansprüche, **dadurch gekennzeichnet, dass** als zusätzliche Bedingung für das Schließen der Feststellbremse ein Abstandssensor Messwerte erfasst, die charakteristisch für eine Stop-and-Go-Situation sind.

## Claims

1. Method for controlling an electric parking brake of a utility vehicle having an electronic control unit (10) and a manual control unit (12) which communicates with the electronic control unit and by means of which driver's requests which are dependant on the type of activation of the manual control unit are transmitted to the electronic control unit, whereby the parking brake is closed on the basis of an action which is carried out by the driver of the utility vehicle and which is not connected to the activation of the manual control unit, whereby the action comprises the driver keeping his foot on the brake pedal for a predefined minimum time interval when the utility vehicle is already stationary and further depressing of the brake pedal after the driver's foot has been kept on the brake pedal.

2. Method according to Claim 1, **characterized in that** further conditions have to be met for the parking brake to close, specifically
- a switched on ignition or, when the ignition is switched off, operation of the electronic control unit using the run on function,
- no fault message from the on-board diagnostics and
- a sufficiently low speed of the utility vehicle.

3. Method according to Claim 2, **characterized in that** the presence of a sufficiently low speed of the utility vehicle is determined by comparing the wheel speed, the vehicle speed output of a controller and the rotational speed of the transmission with predefined threshold values.

4. Method according to one of the preceding claims, **characterized in that** an inter-vehicle distance sensor senses measured values which are characteristic of a stop and go situation as an additional condition for the closing of the parking brake.

## Revendications

1. Procédé de commande d'un frein de stationnement électrique d'un véhicule utilitaire par une unité (10) électronique de commande et par une unité (12) de commande à main, qui communique avec l'unité électronique de commande et par laquelle les souhaits du conducteur, qui dépendent du type d'actionnement de l'unité de commande à main, sont communiqués à l'unité électronique de commande, le frein de stationnement étant serré sur la base d'une action effectuée par le conducteur du véhicule automobile, qui n'est pas en liaison avec l'actionnement de l'unité de commande à main, l'action comprenant le fait de persister à appuyer sur une pédale de frein alors que le véhicule utilitaire est déjà à l'arrêt pendant un intervalle de temps minimum prescrit et, après avoir persister à appuyer sur la pédale de frein, un autre appui sur la pédale de frein.

2. Procédé suivant la revendication 1, **caractérisé en ce que** d'autres conditions pour le serrage du frein de stationnement doivent être présentes, à savoir
- un allumage mis en circuit ou, lorsque l'allumage n'est pas mis en circuit, un fonctionnement de l'unité électronique de commande en utilisant la fonction auto-allumage après l'arrêt,
- pas de message de défaut sur le diagnostic à bord et
- une vitesse suffisamment petite du véhicule utilitaire.

3. Procédé suivant la revendication 2, **caractérisé en ce que** l'on détermine la présence d'une vitesse suffisamment petite du véhicule utilitaire en comparant la vitesse de rotation d'une roue, la sortie de vitesse du véhicule d'une commande et la vitesse de rotation d'une transmission à des valeurs de seuil prescrites.

4. Procédé suivant l'une des revendications précédentes, **caractérisé en ce qu'**un capteur de distance relève, comme conditions supplémentaires pour le serrage du frein de stationnement, des valeurs de mesure qui sont caractéristiques d'une situation de stop-and-go.
